Europäisches Patentamt

European Patent Office

Office européen des brevets

(11) Publication number: **0 091 805**
**B1**

(12) **EUROPEAN PATENT SPECIFICATION**

(45) Date of publication of patent specification: **26.07.89**

(21) Application number: **83302003.5**

(22) Date of filing: **08.04.83**

(51) Int. Cl.⁴: **G 03 B 3/10**, G 02 B 7/11

(54) **Endoscope focus state detectors.**

(30) Priority: **08.04.82 JP 59297/82**
**02.06.82 JP 94277/82**
**05.06.82 JP 96530/82**
**05.06.82 JP 96531/82**
**05.06.82 JP 96532/82**
**05.06.82 JP 96533/82**

(43) Date of publication of application:
**19.10.83 Bulletin 83/42**

(45) Publication of the grant of the patent:
**26.07.89 Bulletin 89/30**

(84) Designated Contracting States:
**AT BE CH DE FR GB IT LI NL SE**

(56) References cited:
**EP-A-0 080 340**
**EP-A-0 084 435**
**EP-A-0 089 804**
**EP-A-0 089 822**
**FR-A-2 477 291**
**US-A-3 333 105**
**US-A-3 599 552**
**US-A-3 999 192**
**US-A-4 032 934**

(73) Proprietor: **OLYMPUS OPTICAL CO., LTD.**
**43-2, 2-chome, Hatagaya Shibuya-ku**
**Tokyo 151 (JP)**

(72) Inventor: **Shishido, Yoshio**
**No. 2-1-30-512, Fuchinobe**
**Sagamihara-shi Kanagawa-ken (JP)**
Inventor: **Matsuo, Kazumasa**
**No. 3-1-7-304 Ochiai**
**Tama-shi Tokyo (JP)**
Inventor: **Miyazaki, Atsushi**
**No. 3 Olympus Oowada ryo 5-19-10**
**Oowadamachi**
**Hachioji-shi Tokyo (JP)**
Inventor: **Nishigaki, Shinichi**
**No. 8-13-2, Seijyo**
**Setagaya-ku Tokyo (JP)**
Inventor: **Kato, Shinichi**
**No. 2 Olympus Oowada ryo 7-14-11**
**Oowadamachi**
**Hachioji-shi Tokyo (JP)**
Inventor: **Takahashi, Susumu**
**Olympus Oowada ryo 4-22-13, Oowadacho**
**Hachioji-shi Tokyo (JP)**
Inventor: **Nakamura, Takeaki**
**No. 6-9-8 Asahigaoka**
**Hino-shi Tokyo (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 091 805 B1**

(72) Inventor: **Ishikawa, Akibumi**
**No. 4425 Kamiongatamachi**
**Hachioji-shi Tokyo (JP)**

(74) Representative: **Kennedy, Victor Kenneth et al**
**G.F. REDFERN & CO. Marlborough Lodge 14**
**Farncombe Road**
**Worthing West Sussex BN11 2BT (GB)**

## Description

The invention relates to endoscopes for visual observation or image-recording, e.g. by an optical camera or television camera, as described in the introductory clause of present Claim 1.

With known focus state detectors, in cases where the object to be recorded or observed is dark, or if a dark-field optical system is to be used, then generally the available detector output, given by a photoelectric transducer element will be so small that positive focus state detection will be virtually impossible.

Therefore, means have been proposed to project a beam of a fixed form toward an object that is to be observed or recorded, as is disclosed in the Gazette of Japanese Patent publication No. 19810/1974. However, as this requires an optical system independent of the image-forming lens system, such means cannot be readily applied to endoscopes, wherein there is only a signal optical system light path available.

Also, in detectors where a split prism is used, as is disclosed in the gazette of laid open Japanese patent No. 128923/1981, there are problems that at least two very minute photoelectric transducer elements are required and, in order to obtain high precision, many photoelectric transducer elements will be required, so that the circuit system for comparing their output signals and detecting whether the focus state is correct or not will be complicated, and particularly when products are to be made in relatively small numbers, they will be very costly.

A focus state detector with a plurality of photoelectric transducer elements using a diffracting plate is disclosed in the gazette of laid open Japanese patent No. 10131/1975. However, therein, as in the above described conventional example, the detector optical system is independent of the main optical system, so that such a device cannot be readily applied to an endoscope or the like in which there is only one optical system light path available.

A focus state detector wherein a light source is periodically flickered to project successive spots of light onto an object to be recorded or observed, and the output signals obtained from the transducer during extinguished periods are deducted from the output signals obtained in the lighted intervals in order to reduce the influence of external light other than that of the light source and so provide focus state detection even if the object to be recorded or observed is dark, or a dark-field optical system is to be used, is disclosed in the gazette of laid open Japanese patent No, 125713/1981. However, in this known example, two separate positions conjugate with the predetermined image forming surface are provided, one to each side of the image forming surface so that the light projected onto the object by the light projecting means arranged in one place may be received by the light receiving means arranged in the other place, and this has led to problems in that comparatively large spaces are required for the light projecting means and light receiving means, and the formations of the optical system and circuit system for focus state detection are complicated and costly.

Our European Patent Applications EP-A-0 089 822, EP-A-0 089 804, EP-A-0 080 340 and EP-A-0 084 435 relate to endoscope focus state detectors of the type described in the introductory clause of Claim 1.

In particular, EP-A-0 089 804 and EP-A-0 084 435 disclose endoscopes with focus state detectors comprising a light sensor means, a focus detection light source, and means provided to increase the signal-to-noise ratio.

One object of the present invention is to provide an endoscope focus state detector capable of detecting the state of focusing with high precision, using a simple structure of low cost.

In accordance with the invention, the switching regulator which fulfills this aim is designed in the manner described in the characterising part of present Claim 1.

Further advantageous features are defined in the dependent Claims.

The invention will now be described with reference to the drawings, in which:

Figure 1 is an explanatory schematic view showing details of the optical system, focus state detector and lens setting device arranged within a camera adapter fitted to an endoscope in a first exemplary embodiment of the invention;

Figure 2 is a block schematic circuit diagram of the focussed state image-recording device used in the embodiment shown in Figure 1;

Figure 3 shows related waveforms for Figure 2;

Figure 4 is a schematic explanatory view showing an optical system of the focussed state image-recording device used in a second exemplary embodiment; and

Figure 5 is a schematic explanatory view showing the optical system of a third exemplary embodiment.

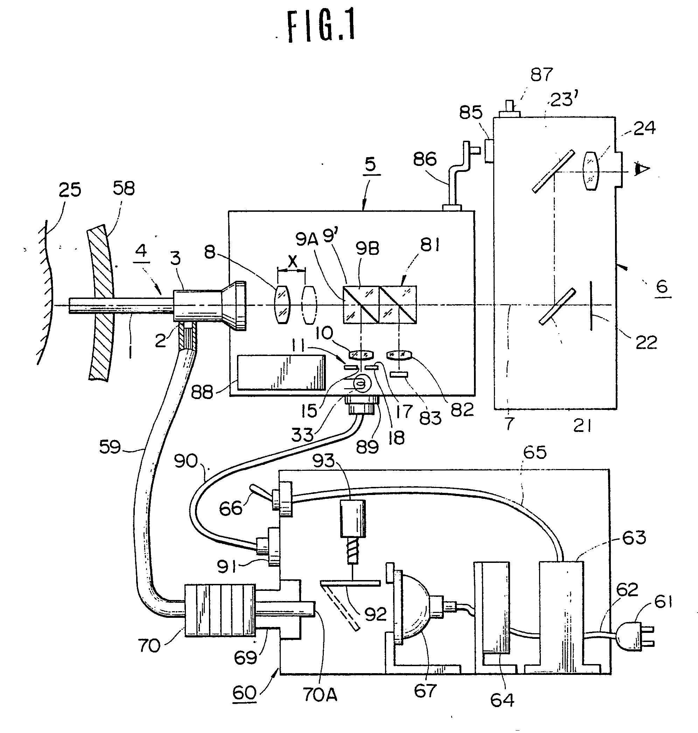

The optical system of the first embodiment, shown in Figure 1, forms part of a focus state detector and setting device.

A camera adapter 5, such as a photographic adapter to be interposed between an endoscope and a photographic camera, is removably fitted to the rear end of an eyepiece 3 of an endoscope 4 that has an elongate insertion sheath 1 extending from a hand grip part containing an observing objective optical system, a light guide entry port 2 being provided on the side of the hand grip. An image-recording device, such as a photographic camera 6 or a television camera, can be removably fitted to the rear end of this camera adapter 5.

The optical system of a focus state recording and setting device which moves a photographic lens automatically to set the correct focus position, using a focus state detector, in contained in the camera adapter 5.

Figure 1 shows the arrangement of a photographic device in this first exemplary embodiment of the present invention, wherein a periodically moving object 25 such as a heart, is to be photographed, exposure being made automatically at the instant when a correctly focussed state is reached.

Within an adapter 5 a beam splitter 9', formed by joining two rectangular prisms (9A and 9B) by their inclined surfaces, is arranged to the rear of the lens 8 movable for a distance x, and a further light measuring beam splitter 81 is arranged adjacent, but to the rear, of the beam splitter 9'. A light measuring lens 82 and light measuring photoelectric transducer element 83 are arranged in sequence to the rear of this beam splitter 81 on the reflected optical axis.

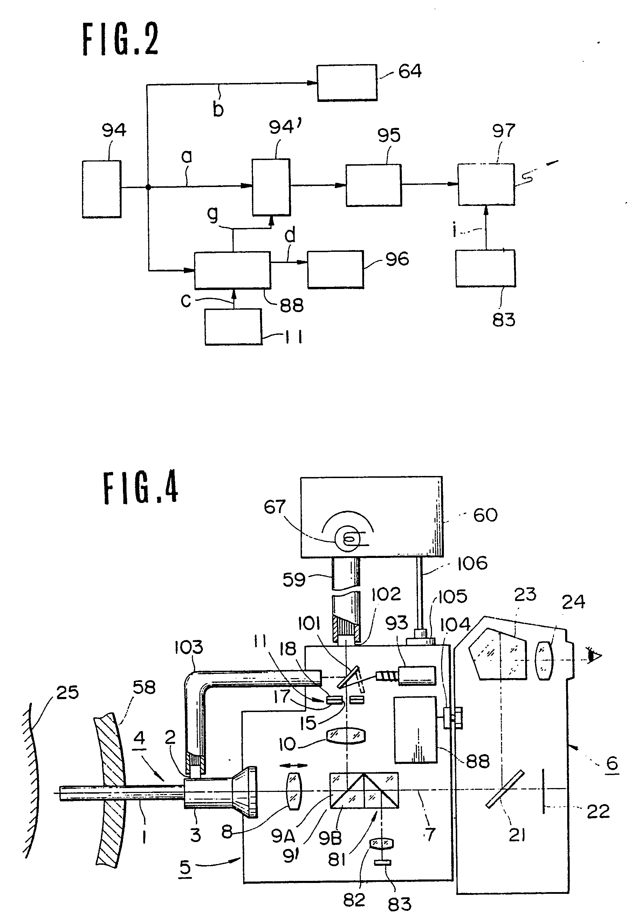

In the adapter 5 a signal can be transmitted to the camera 6 through a signal cable 86 connected to a connector 85, respective functions shown in Figure 2 being controlled through the signal cable 86, e.g. by pushing a release button 87 provided on the upper side of the camera 6 to operate a control circuit 88. This control circuit 88 is electrically connected via a cable 90 extending between a connector 89 on the adapter 5 and a connector 91 on the light source 60, so that, during the focus state detector operation, a signal may be fed from the light source 60, the illuminating and diagnostic light intercepted by a shielding plate 92, and the precision of the focus state detection thus improved.

A control circuit 64 contained in the light source 60 is formed of an exposure preventing means operating a plunger 93, for example, when a signal of a high level is transmitted during the focus state detection operation, to rotate the shielding plate 92 to the position indicated by the broken line and prevent the illuminating light from the lamp 67 from reaching the tip 70A of the connector 70 of the light guide cable 59.

In this embodiment, a reflecting mirror 23' is used in the camera 6 instead of the penta-prism 23 of the second embodiment to be described.

The control circuit 88 operated by pushing the release button 87 provided on the camera 6 is so formed as to control respective functions shown in the block schematic circuit diagram shown in Figure 2.

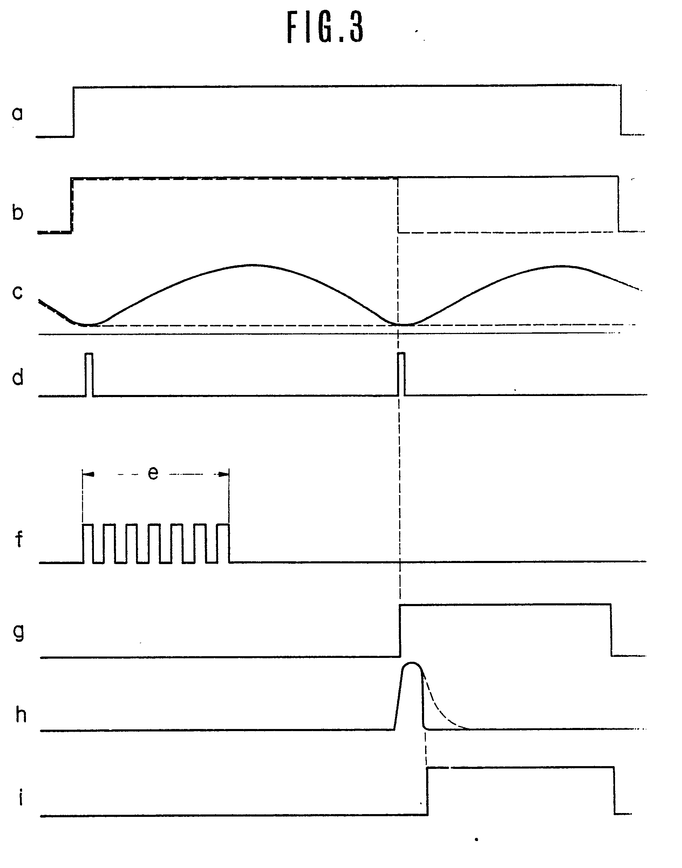

If the button 87 of an exposure release 94 is pushed, the control circuit 88 will be operated, and a release signal 'a' having the waveform as shown in Figure 3a will be emitted to put the release 94 into a stand-by state 94'. When this signal 'a' is at a high level, if a driving signal to be described is applied at a predetermined time, the release 94' will be able to open the shutter 95 of the camera 6. The signal 'a' is transmitted to the light source 60 through the cable 90, and if the signal 'a' is at the high level, for example, the control circuit 64 within the light source 60 will operate the plunger 93 with a plunger operating signal 'b' having the waveform shown in Figure 3b, to rotate the shielding plate 92 to be in the state shown by the broken line, and block the illuminating and diagnostic lamp 67, whilst leaving a stroboscope unshielded. When in this state, the focus state detector light source 33 will be energised, this light will pass through the aperture 15 and be reflected by the beam splitter 9' to be projected via objective lens 8 and the observing optical system of the endoscope 4 onto the object 25 that is to be photographed, such as an internal organ, and will be received back at the photoelectric transducer element 11 in which the aperture 15 is formed. When the transducer signal output 'c' shown in Figure 3c reaches the minimum value, the control circuit 88 will emit a minimum value detecting signal 'd' and as shown in Figure 3d, only at the time of the first minimum value, for a predetermined period 'e' a pulse sequence 'f' will be emitted as shown in Figure 3f, so that a focus-indicating means 96 such as a light emitting diode or the like, positioned within the camera viewfinder field of view is energised or an audible announcing means such as a buzzer will be operated.

Once it is indicated that the periodic movement of the object that is to be recorded is moving into a correctly focused position during its cyclic movement, the next time the object moves with the heart or breathing and is once more correctly focused, a driving signal 'g' (Figure 3g) will be emitted to the stand-by release 94' and stroboscopic light 97 within the light source 60 will be triggered to emit a pulse of light having the waveform shown by Figure 3h, the light of this stroboscope 97 being projected onto the object 25 through the light guide cable 59 to form an exposure on the camera film. When the detected light (or exposure) amount measured by the photoelectric transducer element 83 within the adapter 5 indicates an adequate exposure level, an exposure terminating stopping signal 'i' (Figure 3i) will be emitted for a predetermined period to end the stroboscope 97 lighting time. When the above mentioned exposure terminating signal 'i' is at the low level (or is not emitted), the shutter 95 will close and the release 94' will return to its normal rest state.

The operation of the thus formed first embodiment will now be explained in greater detail.

The operator manually sets the photographic objective lens 8 in advance, for example, at the nearest point at which an image of the object 25 can be clearly formed, or in any other position in which the object is required to be photographed. When the release button 87 is depressed the shutter 95 within the camera 6 does not immediately open, but the release signal 'a' shown in Figure 3 is emitted and the release 94 set to a stand-by state 94', whilst the output signal 'c' from the photoelectric transducer element 11 will be fed into the control circuit 88 to detect the state of focus at any instant. In this case, the object 25 is moving forward and rearward, and the output signal 'c' will vary cyclically as shown in Figure 3. At the time of each minimum value the control circuit 88 will emit a minimum value signal 'd'.

While this focus state detection is being made, the control circuit 88 will transmit the signal to the light source device 60 through the cable 90 and the plunger 93 will be operated to block the observing illuminating light so that the signal-to-noise ratio for focus state detection is improved.

When the first minimum value detecting signal 'd' is emitted during a predetermined period, indicating means 96 light a lamp or energise a buzzer for the period 'e', to show that the correct focus state is present in each cycle with the manually set position of the lens 8, so that a clear photographic image can be obtained. When this indicator means 96 has operated for the set predetermined period 'e' then when the next minimum value detecting signal 'd' is emitted, the shutter 95 will open, the return mirror 21 will retreat, by rotating or the like, and the strobe 97 will emit a light pulse as shown by the waveform 'h' in Figure 3. In this case, the amount of the light received from the object 25 from the strobe 97 will be measured by the photoelectric transducer element 83 within the adapter 5. When a proper exposure time is reached, the exposure terminating signal 'i' will be automatically emitted to stop the light emission from the strobe 97. When this exposure terminating signal 'i' ceases, the shutter 95 will close and the release 94' will be set back to its initial state, so that a further photographic exposure operation will be possible.

This first embodiment has many advantages, as the work of the lens driving system is replaced by a manual operation, the drive can be omitted and the device made light and small, whilst a well focused photograph of high reliability can be achieved. Furthermore, a photograph of the object having no lack of focus can be taken at a proper timing after the existance of a correct state of focus is confirmed. As the shutter 95 automatically opens at a desired timing after focusing, there need be no hand displacement in the direction at right angles to the optical axis. Finally, as the lens driving system is rendered unnecessary, the device can be cheap to manufacture.

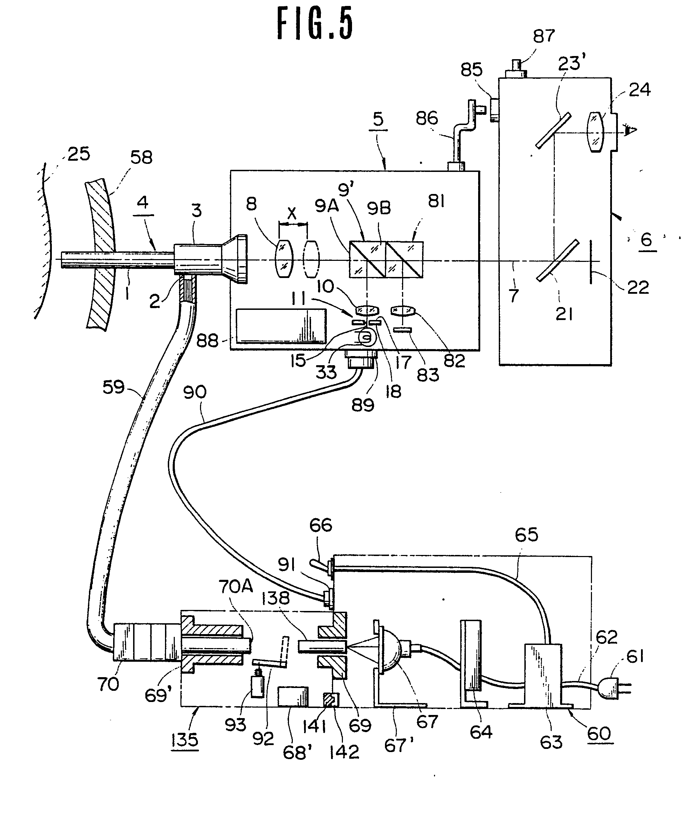

Figure 4 shows a modified photographic device forming a second exemplary embodiment, wherein light from the illuminating lamp 67 within the light source 60 is used both for photographic exposure and focus state detection.

A rotatable mirror 101 that can be withdrawn from the blocking position shown by the solid line is arranged, inclined for example by 45 degrees to the rear of the aperture 15 of the photoelectric transducer element 11 and a light guide entry port 102 is formed on the outer periphery of the adapter 5 to the rear of the mirror 101, so that the light guide cable 59 transmits illuminating light from the lamp 67 contained in the external light source 60.

The illuminating light transmitted via this light guide entry port 102 will be reflected by the mirror 101 on to an end face of a light guide cable 103 fitted by a connector (not illustrated) to be positioned with its end face in the adapter 5 on the optical axis from the mirror 101. The other end of the cable 103 is fitted to the light guide entry port 2 of the endoscope 4. The illuminating light from the lamp 67 will be fed to the mirror 101 within the adapter 5 through the light guide cable 59 and fed to the end face of the light guide cable 103.

The mirror 101 can be rotated to be withdrawn from the blocking position shown by the solid line, to the focus state detection position shown by the broken lines, by operation of a plunger 93 that is controlled by the control circuit 88 contained within the adapter 5. When it is rotated and so withdrawn, the illuminating light transmitted and fed to the light guide entry port 102 will pass directly on through the aperture 15 from the back of the light receiving transducer element 11 to function as a light source for focus state detection, no light being fed to the cable 103.

A connector 104 and mating socket are provided respectively on the rear of the adapter 5 and the front of the camera 6, so that when the release button (not illustrated) is depressed, a signal can be transmitted to the control circuit 88 in the adapter 5 from the camera 6.

Further, the adapter 5 and light source 60 can transmit the signal through a cable 106 connected via a socket 105 formed on the outer periphery of the adapter 5 so that the lamp 67 can be controlled by the control circuit 88. The cable 106 can also serve as the power supply cable.

The timing chart of the control circuit 88 in this ninth embodiment is substantially as that shown in Figure 3, except that the wave-form 'b' is as shown by a broken line.

In this embodiment, the plunger operating signal 'b' will operate while the focus state is being detected. The other parts are the same.

The thus formed second embodiment is set as described above. When the release button is depressed, the shutter 95 (not illustrated) of the camera 6 will not open, but the release signal 'a' shown in Figure 3 will be emitted, the release 94 will be set to a stand-by state and the plunger 93 will be operated to rotate and withdraw the mirror 101 to the position shown by broken lines from the position shown by solid lines in Figure 25. Then, the illuminating and diagnostic light from the lamp 67 transmitted via the guide 59 to the connector 102 will pass through the aperture 15 formed in the photoelectric transducer element 11, and will be projected as a spot onto the object 25. The output signal 'c' of the photoelectric transducer element 11 receiving reflected light from a cyclically moving object 25 will be fed to the control circuit 88 to detect the state of focus. In this case, as the object 25 moves forward and rearward the output signal 'c' will vary periodically as shown in Figure 3. At the time of each minimum value, the control circuit 88 will emit a minimum value detecting signal 'd'.

In this case, in normal use the illuminating and diagnostic light is intercepted and not used for focus state detection, but all the light is available to be utilised for focus state detection, when required. Therefore, the object can be well illuminated by a spot with adequate intensity and focus state detection can be effected with high precision.

When the first minimum value detecting signal 'd' is emitted, during a fixed period, the indicator means 96 light a lamp or energise an audible signal such as a buzzer for the period 'e' in Figure 3, the lamp lighting or buzzer sounding being effected by a sequence of pulses 'f' to indicate that correct focus has been present with the manually set position of the lens 8, and that a photographic exposure to give a clear image is possible. When this indicator means 96 has operated for the set period 'e', then at the next instant that a minimum value detecting signal 'd' is emitted (or when the minimum value detecting signal 'd' is next emitted after a given fixed period), the stand-by release 94 will be triggered, the shutter 95 will open, the return mirror 21 will retreat, and an optical image of the object 25 will be formed on the film surface 22. At the same time, the plunger 93 will return to its original state and the strobe 97 will emit a light pulse 'h' as shown in Figure 3. This light pulse will be reflected by the mirror 101 to illuminate the object 25 via the light cable 103 and the illuminating optical system of the endoscope 4. In this case, the magnitude of light received from the object 25 following the exposure pulse of the strobe 97 will be measured by the photoelectric transducer element 83 within the adapter 5. When a correct exposure level is reached, the exposure terminating signal 'i' will be automatically emitted to stop light emission by the strobe 97, and when this signal 'i' ceases the shutter 95 will close and the stand-by release 94' will return to its initial rest state so that a further photographic exposure operation is possible.

The effects of the correctly focused exposure photography device formed with the second embodiment are substantially the same as for the first embodiment. As the illuminating diagnostic light from outside the adapter 5 is utilised for focus state detection, a light level of sufficient intensity can readily be projected, and the focus state can be detected with high precision, even in a dark-field optical system.

The beam splitters 9' and 81 shown in the first and second embodiments can be replaced by semi-silvered mirrors.

Also, in the first and second embodiments, as the lens 8 is set in advance, and the release button 97 then depressed to obtain a signal when the object 25 that is to be recorded moves to reach the correct focus point, as confirmed by the indicator means 96, the object 25 will be photographed when it next reaches the correct focus point. In case the moving distance of the object 25 relative to the lens 8 is small, or the object is substantially stationary, if the release button 87 is initially depressed and then the lens 8 is moved until a correct focused point is reached, the indicator means 96 will then operate (in this case, the focus state detector signal 'c' will be as shown by way of example by broken lines in Figure 3). Therefore, the lens 8 can be finely adjusted to set the correctly focused point and the stand-by release 94' can be operated to open the shutter 95 and to make the strobe 97 emit a light pulse so that the object may be photographed with a proper exposure amount. The indicator means 96 can be operated to make successive photographic exposures of the object.

The indicator means 96 are not essential, and the shutter 95 may be opened to photograph the object as soon as the correct focus state is reached.

As described above, when the lens is manually set and an exposure initiated by depressing the release button, then the possibility of making a correctly focused exposure will be confirmed by the indicator means and, in cases where photography is possible, if the correctly focused state is achieved made after a given time interval, the photograph will be made automatically with a proper exposure. Therefore, the effects of handshake can be avoided, and will not vibrate the camera during the exposure.

A third embodiment is shown in Figure 5, which corresponds to the first embodiment shown in Figure 1, but has the means by which the illuminating light can be cut off during focus state detection (range finding) mounted in the connecting adapter 135.

The plunger 93 arranged within the connecting adapter 135 will rotate the light intercepting plate 92 from the position shown by solid lines to the position shown by broken lines, to intercept the illuminating diagnostic light during range finding, but will withdraw it from the light path back to the position shown by solid lines when an exposure is to be made. As a means for controlling the above mentioned operation, a control circuit 68' is contained within the connecting adapter 135 so that when connecting adapter 135 is fitted to the light source 60, this control circuit 68' can be electrically connected through a connector 141 with the light source 60, which is provided with a connector socket 142 to transmit and receive the required signals.

The operation of this embodiment is as described with reference to Figure 1.

## Claims

1. An endoscope focus state detector for use in or with an endoscope (4) having an illuminating light source (60) for transmitting illuminating light through a light guide to be projected onto an object (25) that is to be observed or recorded via an optical system (3,8) and a light-spot guide to project a light spot onto the object (25) through an image-forming lens (8) of said optical system, the image of the illuminated object being passed back to a predetermined image forming surface on a light sensor means (83) having a photo-electric transducer surface in order to detect whether the image of said object is in a correctly focused state a focus state, detecting aperture (15) being formed in said light sensor means, a focus detection light source (33) to project light through an aperture formed in or adjacent said light sensor means, and means to increase the signal-to-noise ratio by preventing illuminating light projected onto the object from influencing the output of said transducer, said means for increasing said signal-to-noise ratio incorporating means (88,90,93) providing periods in which said illuminating light is not projected, and focus state detection is only effected using the transducer output level obtained in said non-light projecting periods, characterised in that said means providing non-light projecting periods comprises a light intercepting plate (92) rotatable by a plunger (93) to intercept the light path from said illuminating light source (60).

2. An endoscope focus state detector as claimed in Claim 1, characterised in that said light sensor means (83) is contained in a camera adapter (5).

3. An endoscope focus state detector as claimed in Claim 1, characterised in that said light sensor means is contained in a camera (6).

4. An endoscope focus state detector as claimed in any preceding Claim, characterised in that said light sensor means is formed of a single photoelectric transducer element (83) provided with an aperture (15) on its photoelectric surface.

5. An endoscope focus state detector as claimed in any one of Claims 1 to 3, characterised in that said light sensor means is formed of a light intercepting plate (18) proved with an aperture and a photoelectric transducer element (11) arranged to the rear of said aperture.

6. An endoscope focus state detector as claimed in any one of Claims 1 to 3, characterised in that said light sensor means is formed of two separate photoelectric transducer elements (11,83) arranged to define an aperture and to have mutually-different light path lengths from said object to be observed or recorded.

7. An endoscope focus state detector as claimed in Claim 6, characterised in that said light path lengths differ from each other due to the respective light receiving surfaces of the photoelectric transducer elements being arranged stepped in the optical axis direction.

8. An endoscope focus state detector as claimed in Claim 6, characterised in that said light path lengths differ from each other due to the provision of a flat transparent plate arranged on one of the said photoelectric transducer elements.

9. An endoscope focus state detector as claimed in Claim 6, characterised in that said light path lengths differ from each other due to a wedge-shaped transparent member arranged in front of the light receiving surface of at least one of said photoelectric transducer elements.

10. An endoscope focus state detector as claimed in any preceding Claim, characterised in that indicator means (96) are provided to show when said lens is in the correct state of focus.

11. An endoscope focus state detector as claimed in Claim 10, characterised in that said indicator means are formed to trigger an exposure.

12. An endoscope focus state detector as claimed in any preceding Claim characterised in that the output of said light sensor means controls a lens drive (88) for adjusting the position of said image-forming lens to the state of correct focus.

**Patentansprüche**

1. Fokussiererfassungsvorrichtung zur Verwendung in oder mit einem Endoskop (4) bestehend aus einer aus- oder beleuchtenden Lichtquelle (60) zum Übertragen von Beleuchtungslicht durch eine Leuchtführung, die auf ein zu beobachtendes oder über ein optisches System (3,8) aufzuzeichnendes Objekt (25) zu projizieren ist, und eine Leuchtpunktführung, um einen Leuchtpunkt auf den Gegenstand (25) durch eine abbildbildende Linse (8) des optischen Systems zu projizieren, wobei das Abbild des beleuchteten Gegenstandes an eine vorbestimmte abbildbildende Oberfläche auf einer Lichtmeßfühlereinrichtung, die eine photoelektrische Winkfläche aufweist, zurückgeleitet wird, um zu ermitteln, ob sich das Abbild in richtigem Fokussierzustand befindet, einer Fokussierzustanderfasungseinrichtung (15), die in der Lichtmeßfühlereinrichtung ausgebildet ist, einer Fokussiererfassungslichtquelle (33), um Licht durch eine in oder nächstliegend an der Lichtmeßwertfühlereinrichtung ausgebildete Öffnung zu projizieren, und eine Einrichtung zur Erhöhung des Störabstandes, in dem das auf das Objekt projizierte ausleuchtende Licht daran gehindert wird, den Ausgang des Meßwertwandlers zu beeinflussen, wobei die Einrichtung zum Erhöhen des Störabstandes Einrichtungen (88, 90, 93) beinhaltet, durch die Perioden vorgesehen werden, in denen kein Licht projiziert wird, und wobei die Fokussierzustandserfassung nur unter Verwendung des Meßwertausgangspegels bewirkt wird, den man in den Perioden erhält, in denen kein Licht projiziert wird, dadurch gekennzeichnet, daß die Einrichtung, durch die die Perioden geschaffen werden, in denen kein Licht projiziert wird, eine Lichtabfangplatte (92) aufweist, die durch einen Stößel (93) drehbar ist, um zwischen die Lichtbahn von der beleuchtenden Lichtquelle (60) zu treten.

2. Fokussiererfassungsvorrichtung für Endoskope nach Anspruch 1, dadurch gekennzeichnet, daß die Lichtmeßfühlereinrichtung (83) in einem Kameraadapter (5) enthalten ist.

3. Fokussiererfassungsvorrichtung für Endoskope nach Anspruch 1, dadurch gekennzeichnet, daß die Lichtmeßfühlereinrichtung in einer Kamera (6) enthalten ist.

4. Fokussiererfassungsvorrichtung für Endoskope nach einem der vorhergehenden Ansprüche 1 bis 3, dadurch gekennzeichnet, daß die Lichtmeßfühlereinrichtung aus einem einzelnen photoelektrischen Meßgrößenumformerelement (83) gebildet ist, das auf seiner photoelektrischen Oberfläche mit einer Öffnung (15) versehen ist.

5. Fokussiererfassungsvorrichtung für Endoskope nach einem der vorhergehenden Ansprüche 1 bis 3, dadurch gekennzeichnet, daß die Lichtmeßfühlereinrichtung aus einer lichtabfangenden Platte (18), die mit einer Öffnung versehen ist, und einem photoelektrischen Meßgrößenumformerelement (11) gebildet ist, das hinter der Öffnung angeordnet liegt.

6. Fokussiererfassungsvorrichtung für Endoskope nach einem der vorhergehenden Ansprüche 1 bis 3, dadurch gekennzeichnet, daß die Lichtmeßfühlereinrichtung aus zwei getrennten photoelektrischen Meßgrößenumformerelementen (11, 83) gebildet ist, die angeordnet sind, eine Öffnung zu bestimmen und wechselweise unterschiedliche Lichtbahnlängen vom zu beobachtenden oder aufzuzeichnenden Objekt zu haben.

7. Fokussiererfassungsvorrichtung für Endoskope nach Anspruch 6, dadurch gekennzeichnet, daß die Lichtbahnlängen sich von einander aufgrund der jeweiligen Lichtaufnahmeflächen der photoelektrischen Meßgrößenumformerelemente unterscheiden, die in der Richtung der optischen Achse stufenweise angeordnet sind.

8. Fokussiererfassungsvorrichtung für Endoskope nach Anspruch 6, dadurch gekennzeichnet, daß die Lichtbahnlängen sich von einander aufgrund der Tatsache unterscheiden, daß eine flache transparente Platte vorgesehen ist, die auf einem der photoelektrischen Meßgrößenumformerelementen angeordnet ist.

9. Fokussiererfassungsvorrichtung für Endoskope nach Anspruch 6, dadurch gekennzeichnet, daß die Lichtbahnlängen sich von einander aufgrund eines keilförmigen transparenten Gliedes unterscheiden, das vor der lichtaufnehmenden Oberfläche zumindest eines photoelektrischen Meßgrößenumformerelementes angeordnet ist.

10. Fokussiererfassungsvorrichtung für Endoskope nach einem der vorhergehenden Ansprüche 1 bis 9, dadurch gekennzeichnet, daß eine Anzeigeeinrichtung (96) vorgesehen ist, durch die angezeigt wird, wann sich die Linse im richtigen Fokussierzustand befindet.

11. Fokussiererfassungsvorrichtung für Endoskope nach Anspruch 10, dadurch gekennzeichnet, daß die Anzeigeeinrichtung so ausgebildet ist, daß durch sie eine Belichtung ausgelöst wird.

12. Fokussiererfassungsvorrichtung für Endoskope nach einem der vorhergehenden Ansprüche 1 bis 11, dadurch gekennzeichnet, daß der Ausgang der Lichtmeßfühlereinrichtung den Linsenantrieb (88) zum Einstellen der Position der abbildbildenden Linse in den Zustand des richtigen Fokus steuert.

## Revendications

1. Détecteur d'état de focalisation pour endoscope, destiné à être utilisé dans ou avec un endoscope (4) comprenant une source de lumière d'éclairage (60) qui transmet la lumière d'éclairage à un guide de lumière pour sa projection sur un objet (25) qui doit être observé ou enregistré par l'intermédiaire d'un système optique (3, 8), et un guide de point lumineux qui projette un point lumineux sur l'objet (25) par l'intermédiaire d'une lentille de formation d'image (8) dudit système optique, l'image de l'objet éclairé étant renvoyée vers une surface de formation d'image prédéterminée sur un moyen détecteur de lumière (83), qui est une surface d'un transducteur photoélectrique, pour détecter si l'image dudit objet est à l'état correctement focalisé, une ouverture de détection d'état de focalisation (15) étant constituée dans ledit moyen détecteur de lumière, une source de lumière de détection de focalisation (33) qui projette la lumière par une ouverture constituée dans ou en un point adjacent audit moyen détecteur de lumière, et des moyens pour augmenter le rapport signal/bruit en empêchant la lumière d'éclairage projetée sur l'objet d'influencer la sortie dudit transducteur, lesdits moyens pour augmenter ledit rapport signal/bruit incorporant des moyens (88, 90, 93) déterminant des périodes pendant lesquelles ladite lumière d'éclairage n'est pas projetée, et la détection de l'état de focalisation est seulement réalisée en utilisant le niveau de sortie du transducteur qui est obtenu pendant lesdites périodes de non projection de la lumière, caractérisé en ce que lesdits moyens déterminant les périodes de non projection de la lumière comprennent une plaque d'occultation de la lumière (92) pouvant être entraînée en rotation par un piston (93) pour intercepter le faisceau lumineux provenant de ladite source de lumière d'éclairage (60).

2. Détecteur d'état de focalisation pour endoscope selon la revendication 1, caractérisé en ce que ledit moyen détecteur de lumière (83) est contenu dans un adaptateur de caméra (5).

3. Détecteur d'état de focalisation pour endoscope selon la revendication 1, caractérisé en ce que ledit moyen détecteur de lumière est contenu dans une caméra (6).

4. Détecteur d'état de focalisation pour endoscope selon l'une quelconque des revendications précédentes, caractérisé en ce que ledit moyen détecteur de lumière est formé par un unique élément transducteur photoélectrique (83) muni d'une ouverture (15) sur sa surface photoélectrique.

5. Détecteur d'état de focalisation pour endoscope selon l'une quelconque des revendications 1 à 3, caractérisé en ce que ledit moyen détecteur de lumière est formé d'une plaque d'interception de lumière (18) munie d'une ouverture et d'un élément transducteur photoélectrique (11) disposé à l'arrière de ladite ouverture.

6. Détecteur d'état de focalisation pour endoscope selon l'une quelconque des revendications 1 à 3, caractérisé en ce que ledit moyen détecteur de lumière est formé de deux éléments transducteurs photoélectriques séparés (11, 83) disposés de manière à définir une ouverture et à présenter des longueurs de parcours de lumière mutuellement différentes à partir dudit objet à observer ou à enregistrer.

7. Détecteur d'état de focalisation pour endoscope selon la revendication 6, caractérisé en ce que lesdites longueurs de parcours de lumière sont différentes l'une de l'autre en raison du fait que des surfaces de réception de lumière respectives des éléments transducteurs photoélectriques sont disposées de façon décalée dans la direction de l'axe optique.

8. Détecteur d'état de focalisation pour endoscope selon la revendication 6, caractérisé en ce que lesdites longueurs de parcours de lumière sont différentes l'une de l'autre en raison du fait qu'il est prévu une plaque plate et transparente disposée sur l'un desdits éléments transducteurs photoélectriques.

9. Détecteur d'état de focalisation pour endoscope selon la revendication 6, caractérisé en ce que lesdites longueurs des parcours de lumière sont différentes l'une de l'autre en raison d'un organe transparent en forme de coin disposé à l'avant de la surface réceptrice de lumière de l'un au moins des éléments transducteurs photoélectriques.

10. Détecteur d'état de focalisation pour endoscope selon l'une quelconque des revendications précédentes, caractérisé en ce que des moyens indicateurs (96) sont prévus pour indiquer le moment où ladite lentille est dans un état de focalisation correct.

11. Détecteur d'état de focalisation pour endoscope selon la revendication 10, caractérisé en ce que lesdits moyens indicateurs sont formés de façon à déclencher une exposition.

12. Détecteur d'état de focalisation pour endoscope selon l'une quelconque des revendications précédentes, caractérisé en ce que la sortie dudit moyen détecteur de lumière commande un mécanisme d'entraînement de lentille (88) pour régler la position de ladite lentille de formation d'image sur l'état de focalisation correct.

# FIG.1

# FIG.2

# FIG.4

EP 0 091 805 B1

FIG.3

# FIG.5